Europäisches Patentamt

European Patent Office

Office européen des brevets

(11) Numéro de publication: **0 214 900**
**A1**

## (12) DEMANDE DE BREVET EUROPEEN

(21) Numéro de dépôt: 86401823.9

(22) Date de dépôt: 18.08.86

(51) Int. Cl.⁴: **B 01 D 46/24**
**B 05 B 15/04**

(30) Priorité: 22.08.85 FR 8512612

(43) Date de publication de la demande:
18.03.87 **Bulletin 87/12**

(84) Etats contractants désignés: **DE GB**

(71) Demandeur: **SAMES S.A.**
**Z.I.R.S.T. Chemin de Malacher**
**F-38240 Meylan (FR)**

(72) Inventeur: **Correard, Jean-Yves**
**30 Place J.B. Clément**
**F-38400 Saint Martin D'Heres (FR)**

(74) Mandataire: **CABINET BONNET-THIRION**
**95 Boulevard Beaumarchais**
**F-75003 Paris (FR)**

(54) **Dispositif de filtrage d'un gaz chargé de particules solides comportant des moyens de décolmatage perfectionnés.**

(57) Perfectionnement au décolmatage des filtres secs pour la récupération de poudre dans une installation de poudrage d'objets.

Le filtre (13), tubulaire est de façon connue, placé en regard de moyens générateurs d'une onde de choc (20) dirigeant un jet d'air à l'intérieur du filtre, suivant l'axe (22). Le décolmatage dans la première partie du filtre est amélioré par un obstacle (30) placé au voisinage de l'extrémité ouverte (23) du filtre qui fait face à un injecteur (21) desdits moyens générateurs (20).

FIG.1

**Description**

"Dispositif de filtrage d'un gaz chargé de particules solides comportant des moyens de décolmatage perfectionnés"

L'invention se rapporte à un dispositif de filtrage d'un gaz chargé de particules solides et concerne plus particulièrement un perfectionnement des moyens de décolmatage du ou des filtres.

L'invention trouve son domaine d'application privilégié dans les installations de projection de poudre, notamment par application d'une charge électrostatique, sur des objets à recouvrir; elle permet alors l'épuration de l'air et/ou la récupération et le recyclage de la poudre entraînée par cet air et qui ne s'est pas déposée sur les objets.

On connaît une installation de poudrage d'objets comportant une sorte de cabine dans laquelle transitent les objets à recouvrir, avant que ceux-ci soient acheminés vers un four ou la poudre déposée se transforme en un revêtement homogène et très résistant. Le poudrage et notamment le poudrage électrostatique est donc un procédé qui présente certains avantages sur les procédés de projection de peinture, d'une part parce qu'aucun solvant nocif n'est mis en oeuvre et d'autre part parce que la poudre qui ne s'est pas déposée sur les objets peut être récupérée et recyclée. Dans l'installation de poudrage connue l'air de la cabine est aspiré en permanence, par exemple au travers d'un plancher en caillebotis sous lequel se trouvent des filtres secs. Chaque filtre est par exemple constitué d'une ou plusieurs cartouches tubulaires cylindriques placées bout à bout, chaque cartouche comportant deux parois cylindriques ajourées coaxiales entre lesquelles est confiné un moyen filtrant de grande surface, généralement du papier poreux plié en accordéon. On peut connecter des moyens d'aspiration au conduit interne défini par la ou les cartouches du filtre. Plusieurs rangées de cartouches peuvent ainsi être agencées côte à côte sous la cabine. L'air chargé de la poudre qui ne s'est pas déposée sur les objets à recouvrir est donc aspiré à l'intérieur des rangées de cartouches et la poudre se dépose à l'extérieur de celles-ci. Il est nécessaire de décolmater périodiquement les filtres pour détacher et récupérer l'agrégat de poudre qui se forme sur ceux-ci. Pour cela, il est connu de générer une onde de choc sensiblement axialement dans chaque conduit formé par une rangée donnée de cartouches, au moyen d'un jet d'air comprimé violent et de faible durée. On a constaté que ce système était peu efficace pour un décolmaltage à faible distance. Autrement dit, au moins la cartouche la plus proche de l'injecteur d'air n'est pratiquement jamais décolmatée sur toute ou partie de sa longueur.

L'invention a pour but de résoudre ce problème. L'idée de base de l'invention consiste à faire "éclater" le jet d'air à l'entrée de la cartouche ou de la rangée de cartouches, ce qui force l'onde de choc à se propager vers la paroi de la portion d'entrée de la ou première cartouche tout en créant un système de Venturi susceptible d'augmenter encore l'intensité de l'impulsion d'air envoyée par l'injecteur.

Selon l'invention, ces deux effets conjugués sont au moins en partie obtenus en disposant un obstacle au voisinage de l'entrée de la ou première cartouche.

Plus précisément, l'invention concerne donc un dispositif de filtrage d'un gaz chargé de particules solides, par exemple pour la récupération et le recyclage de poudre en suspension dans de l'air, dans une installation de revêtement d'objects par poudrage, du type comportant au moins un filtre sec de forme générale tubulaire, des moyens d'entraînement dudit gaz pour forcer celui-ci à traverser la paroi latérale dudit filtre et des moyens générateurs d'une onde de choc agencés dans le prolongement d'une extrémité ouverte dudit filtre et dirigés vers celle-ci, caractérisé en ce qu'un obstacle est placé en regard desdits moyens générateurs, au voisinage de ladite extrémité ouverte.

L'invention apparaîtra plus clairement à la lumière de la description qui va suivre de plusieurs modes de réalisation d'un dispositif conforme à son principe, donnée uniquement à titre d'exemple et faite en référence aux dessins annexés dans lesquels:

    - la figure 1 est une coupe schématique partielle, en élévation, d'une installation de poudrage comportant un dispositif de filtrage conforme à l'invention; et

    - les figures 2 et 3 sont des vues partielles illustrant des variantes d'exécution du dispositif de filtrage.

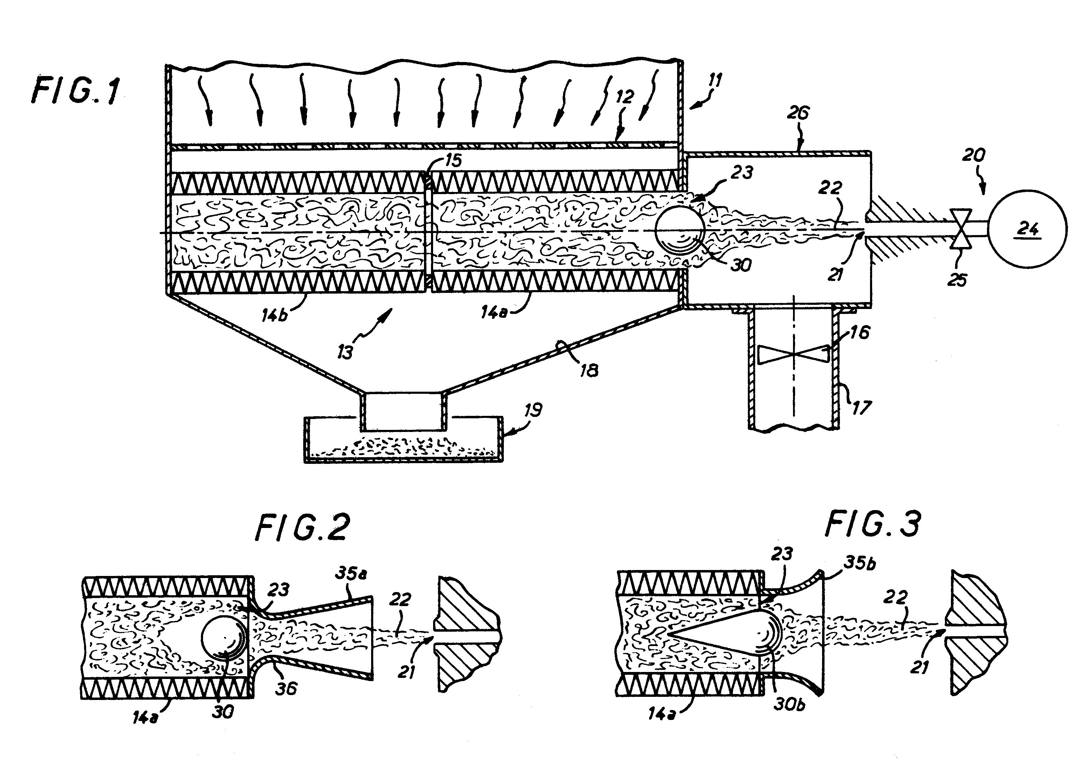

En se reportant plus particulièrement à la figure 1, on a représenté la partie inférieure d'une cabine 11 dans laquelle sont effectuées des opérations de poudrage de pièces diverses transitant dans cette cabine avant d'être acheminées vers un four.

Sous le plancher en caillebotis 12 de cette cabine se trouvent un ou plusieurs filtres secs 13 composés chacun d'au moins une cartouche 14 du type connu décrit ci-dessus. Dans l'exemple représenté, chaque filtre se compose d'une rangée de deux cartouches 14a, 14b montées bout à bout avec interposition d'un joint d'étanchéité 15. Il en est de même pour toutes les autres rangées de cartouches non représentées. Des moyens d'aspiration 16 sont connectés par un conduit 17 à une enceinte 26 commuiquant avec l'extrémité ouverte de la ou première cartouche (ici la cartouche 14a). L'enceinte est commune aux différentes rangées de cartouches. Une trémie 18 est agencée en-dessous des filtres et la poudre récupérée s'accumule dans un réservoir 19 alimenté par ladite trémie.

Pour décolmater périodiquement les filtres, on prévoit des moyens générateurs d'une onde de choc 20 comportant, pour chaque rangée de cartouches, un injecteur d'air 21 agencé selon l'axe 22 du filtre, c'est-à-dire l'axe principal de symétrie commun aux cartouches et dirigé vers l'extrémité ouverte 23 de la cartouche la plus proche (cartouche 14a). Cet injecteur 21 est relié à un réservoir d'air sous pression 24 (4 à 7 bars) par l'intermédiaire d'une vanne commandée 25. L'extrémité ouverte 23 et l'injecteur 21 débouchent tous deux dans l'enceinte 26.

Selon l'invention, un obstacle 30 est placé en regard desdits moyens générateurs d'une onde de choc 20, au voisinage de ladite extrémité ouverte 23. L'obstacle peut avoir des formes et dimensions variées mais de préférence sa surface avant, faisant face à l'injecteur 21, sera au moins approximativement convexe pour atténuer la résistance au passage de l'air insufflé par l'injecteur.

Dans l'exemple illustré à la figure 1, l'obstacle 30 a la forme d'une sphère et son centre est situé sur l'axe 22 sensiblement dans le plan de l'extrémité ouverte 23.

Le fonctionnement du dispositif qui vient d'être décrit est le suivant. Les moyens d'aspiration 16 fonctionnent en permanence pour extraire un mélange air-poudre de la cabine 11. L'air traverse les parois latérales des cartouches 14 et la poudre est retenue à l'extérieur de celles-ci. De temps en temps, la vanne 25 est ouverte pendant un intervalle de temps très bref de façon que l'injecteur 21 délivre une "impulsion" d'air très brève mais à très grande vitesse, voisine de la vitesse du son. Ce jet d'air crée une onde de choc qui se propage le long de l'axe 22, laquelle détache la poudre accumulée à la surface externe du filtre et en fait tomber une partie dans la trémie 18. Grâce à l'obstacle 30, l'onde de choc est efficace sur toute la longueur du filtre et notamment sur la portion de celui-ci la plus proche de l'injecteur 21 au point que, contrairement à ce qu'on constatait dans l'installation connue, la totalité de la cartouche 14a se trouve décolmatée. En effet le jet d'air à grande vitesse va "lécher" la paroi latérale de la première cartouche, là où il était précédemment inefficace parce que trop "fermé", et sans pour autant perdre sa puissance, décolmater la ou les cartouches filtrantes sur toute leur longueur.

Les figures 2 et 3 illustrent des variantes possibles qui se sont révélées efficaces. Dans chacun de ces exemples, l'extrémité ouverte 23 de la cartouche 14a est prolongée par une pièce tubulaire 35a, 35b évasée en direction des moyens générateurs de l'onde de choc, cette pièce tubulaire étant agencée coaxialement au filtre.

Dans le cas de la figure 2, l'obstacle 30 (sphérique comme précédemment) est approximativement entièrement logé dans la cartouche 14a et la pièce tubulaire 35a comprend un étranglement de Venturi 36.

Dans l'exemple de la figure 3, l'obstacle 30b est sensiblement ovoïdal ou en forme de goutte d'eau, pour opposer un minimum de résistance à l'écoulement de l'air de décolmatage. Sa partie avant ressort légèrement du plan de l'extrémité ouverte 23 pour former avec la pièce tubulaire 35b un étranglement de Venturi.

générale tubulaire, des moyens d'entraînement dudit gaz pour forcer celui-ci à traverser la paroi latérale dudit filtre et des moyens générateurs d'une onde de choc (20,21), agencés dans le prolongement d'une extrémité ouverte (23) dudit filtre et dirigés vers celle-ci, caractérisé en ce qu'un obstacle (30) est placé en regard desdits moyens générateurs, au voisinage de ladite extrémité ouverte (23).

2. Dispositif de filtrage selon la revendication 1, caractérisé en ce que la surface avant dudit obstacle (30) faisant face aux moyens génrateurs d'une onde de choc (20,21) est au moins approximativement convexe.

3. Dispositif de filtrage selon la revendication 2, caractérisé en ce que ledit obstacle (30) a sensiblement la forme d'une sphère.

4. Dispositif de filtrage selon la revendication 2, caractérisé en ce que ledit obstacle (30b) est sensiblement ovoïdal ou analogue.

5. Dispositif de filtrage selon l'une des revendications précédentes, caractérisé en ce que ladite extrémité ouverte (23) dudit filtre est prolongée par une pièce tubulaire (35a, 35b) évasée en direction desdits moyens générateurs d'une onde de choc et agencée coaxialement audit filtre.

6. Dispositif de filtrage selon la revendication 5, caractérisé en ce que ladite pièce tubulaire évasée (35b) et ledit obstacle définissent approximativement au niveau de ladite extrémité ouverte (23) un étranglement de Venturi.

7. Dispositif de filtrage selon la revendication 5, caractérisé en ce que la pièce tubulaire (35a) comporte elle-même un étranglement de Venturi (36) et que ledit obstacle (30) est approximativement entièrement logé dans ledit filtre.

8. Dispositif de filtrage selon l'une des revendications précédentes, caractérisé en ce que, de façon connue en soi, lesdits moyens générateurs d'une onde de choc (20) comprennent un injecteur d'air (21) dirigé vers ladite extrémité ouverte (23) et disposé sensiblement suivant l'axe (22) du filtre et un réservoir (24) d'air sous pression relié audit injecteur par l'intermédiaire d'une vanne commandée (25).

**Revendications**

1. Dispositif de filtrage d'un gaz chargé de particules solides, par exemple pour la récupération et le recyclage de poudre en suspension dans de l'air, dans une installation de revêtement d'objets par poudrage, du type comportant au moins un filtre sec (13), de forme

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 409 009 (G.J. LISSY)<br>* Figure 2; colonne 3, ligne 36 - colonne 6, ligne 22 * | 1,5-7 | B 01 D 46/24<br>B 05 B 15/04 |
| | --- | | |
| A | GB-A-2 063 099 (INGEMAR LÖÖF)<br>* Figure 2; page 2, ligne 118 - page 3, ligne 121 * | 1,8 | |
| | ----- | | |

| DOMAINES TECHNIQUES RECHERCHES (Int. Cl 4) |
|---|
| B 01 D 46/00<br>B 05 B 15/00 |

Le présent rapport de recherche a été établi pour toutes les revendications

| Lieu de la recherche | Date d'achèvement de la recherche | Examinateur |
|---|---|---|
| LA HAYE | 18-11-1986 | BOGAERTS M.L.M. |